# EUROPEAN PATENT APPLICATION

(11) **EP 4 821 641 A1**
(43) Date of publication of application: **14.10.2026**
(21) Application number: 26170311.0
(22) Date of filing: 01.04.2026
(51) Int. Cl.: B25J 9/04, B25J 9/10

(54) **ROBOT**

(30) Priority: 09.04.2025 JP 2025064298
(71) Applicant: Seiko Epson Corporation, Tokyo 160-8801 (JP)
(72) Inventor: SAKAMACHI, Junki, Suwa-shi, Nagano 392-8502 (JP)
(74) Representative: MERH-IP Matias Erny Reichl Hoffmann Patentanwälte PartG mbB

(57) **Abstract**

A robot includes a second arm, a shaft provided at a distal end section of the second arm and configured to rotate about a third axis and to move up and down along the third axis, a first motor configured to generate power for rotating the shaft, a second motor configured to generate power for moving the shaft up and down, and a first transmission section. The first transmission section includes a first pulley, a second pulley, a first endless belt wound around the first pulley and the second pulley, a third pulley, a fourth pulley, and a second endless belt wound around the third pulley and the fourth pulley. The second pulley and the third pulley are located below the second motor in a first direction parallel to the third axis.

## Description

The present application is based on, and claims priority from JP Application Serial Number 2025-064298, filed April 9, 2025, the disclosure of which is hereby incorporated by reference herein in its entirety.

### BACKGROUND

### 1. Technical Field

The present disclosure relates to a robot.

### 2. Related Art

A robot described in JP-A-2016-140921 includes a base, a first arm provided on the base and configured to rotate with respect to the base, a second arm provided on the first arm and configured to rotate with respect to the first arm, and a shaft provided at the second arm and configured to rotate and to move up and down. The second arm is provided with a motor that generates power for rotating the shaft, and a belt and a spline mechanism that transmit the power of this motor to the shaft. In addition, the second arm is provided with a motor that generates power for moving the shaft up and down, and a belt and a lead screw mechanism that transmit the power of this motor to the shaft. An end effector is mounted on a distal end section of the shaft. In addition, in order to rotate the shaft and the end effector, it is known that it is necessary to apply a certain amount of torque to the shaft, and that a transmission section is provided in the second arm. The transmission section decelerates a rotation of the motor for rotating the shaft and transmits the decelerated rotation to the shaft.

However, depending on the position and the mass of the transmission section, the moment of inertia when the second arm is rotated increases.

### SUMMARY

According to an application example of the present disclosure, a robot includes a base, a first arm provided on the base and configured to rotate about a first axis with respect to the base, a second arm provided on the first arm and configured to rotate about a second axis parallel to the first axis with respect to the first arm, a shaft provided at a distal end section of the second arm and configured to rotate about a third axis parallel to the second axis and to move up and down along the third axis, a first motor provided in the second arm and configured to generate power for rotating the shaft, a second motor provided in the second arm and configured to generate power for moving the shaft up and down, a first transmission section provided in the second arm and configured to decelerate a rotation of the first motor to transmit the decelerated rotation to the shaft, and a second transmission section provided in the second arm and configured to transmit a rotation of the second motor to the shaft. When a direction parallel to the third axis is a first direction, the first transmission section includes a first pulley located below the first motor in the first direction and fixed to an output shaft of the first motor, a second pulley located between the first pulley and the shaft, a first endless belt wound around the first pulley and the second pulley, a third pulley coaxially fixed to the second pulley, a fourth pulley provided coaxially with the shaft, and a second endless belt wound around the third pulley and the fourth pulley. The second pulley and the third pulley are located below the second motor in the first direction.

### BRIEF DESCRIPTION OF THE DRAWINGS

FIG. 1 is a side view illustrating a robot system including a robot according to an embodiment of the present disclosure.
FIG. 2 is a partial sectional view of a second arm included in the robot illustrated in FIG. 1.
FIG. 3 is an enlarged view of a range surrounded by a broken line III in FIG. 2.
FIG. 4 is a perspective view illustrating a state in which a support member illustrated in FIG. 2 is fixed to an arm base of the second arm.

### DESCRIPTION OF EMBODIMENTS

Hereinafter, embodiments of the present disclosure will be described with reference to the drawings. Note that the following description does not limit the technical range or the meaning of the terms described in the claims. In addition, the dimensional ratios in the drawings are exaggerated for convenience of description and may be different from the actual ratios. In the embodiments of the present disclosure, unless otherwise specified and limited, the terms "connected", "fixed", and the like should be understood in a broad sense. For example, "fixed" includes fixed connection, detachable connection, or being integral, "connected" may be mechanical connection or electrical connection, may be direct connection or indirect connection via another member, and may be internal connection between two elements or interaction between two elements unless otherwise explicitly limited. A person skilled in the art can understand specific meanings of the foregoing terms in the embodiments of the present disclosure according to specific situations.

A robot 10 according to an embodiment of the present disclosure will be described.

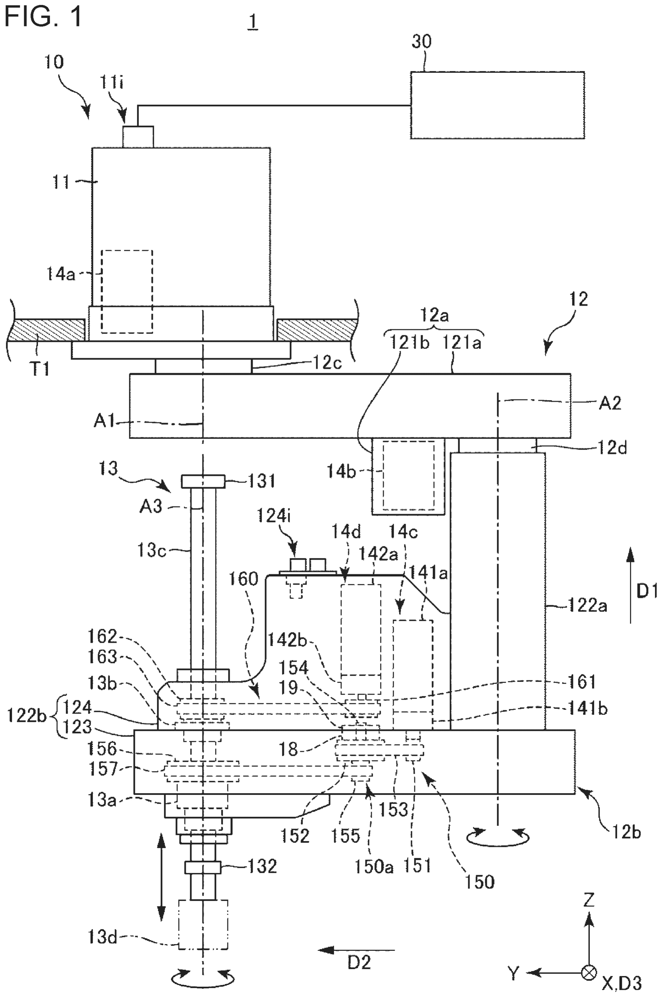

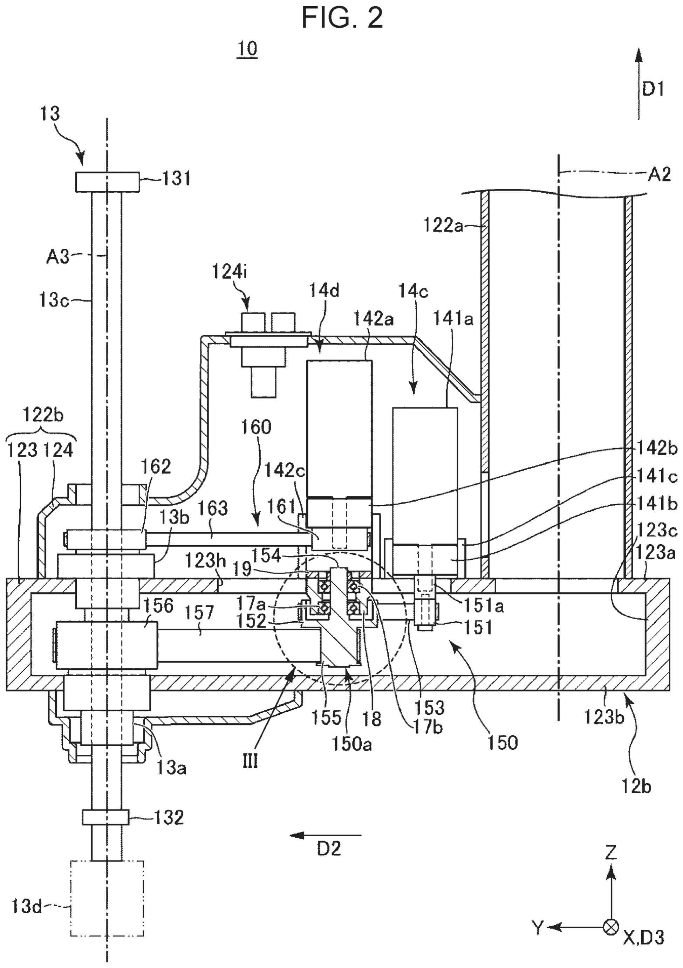

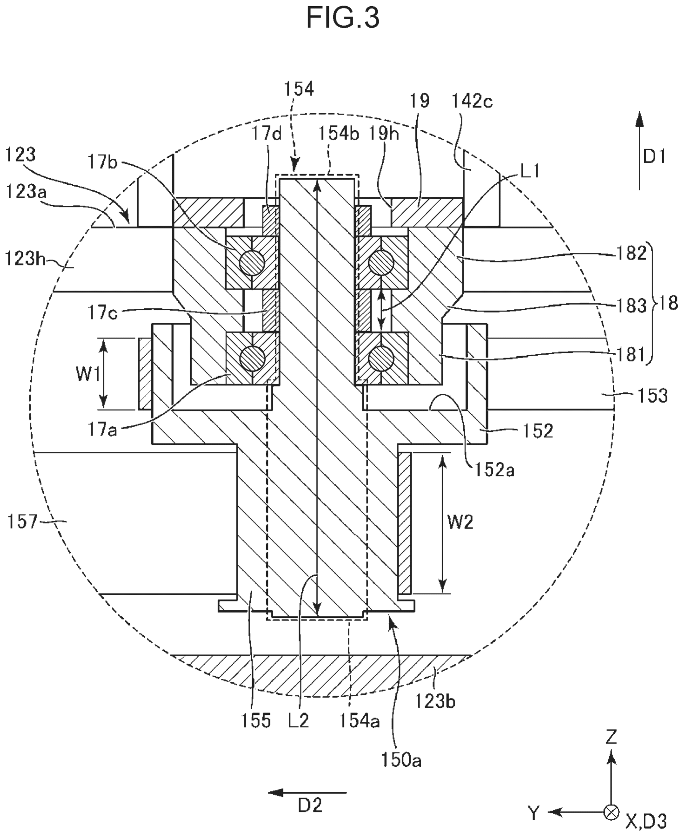

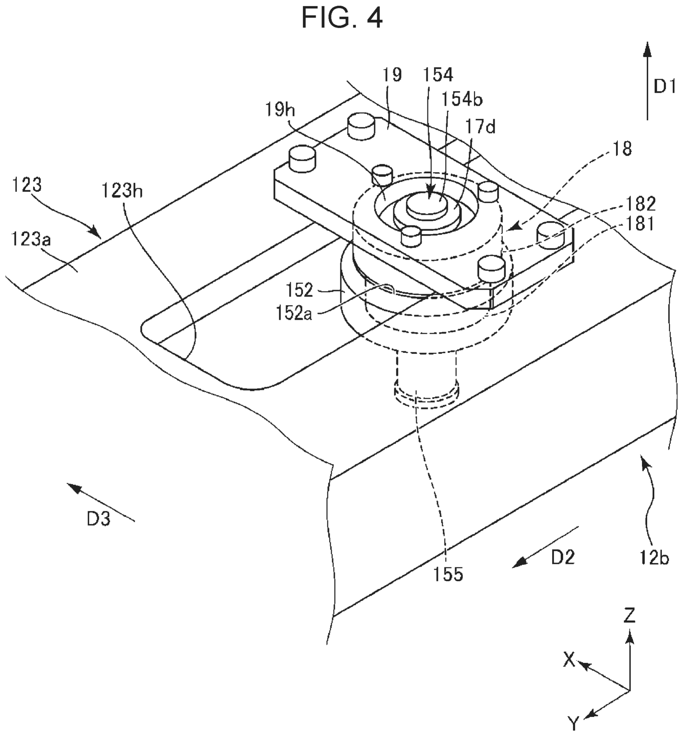

FIG. 1 is a side view illustrating a robot system 1 including the robot 10 according to the present embodiment. FIG. 2 is a partial sectional view of a second arm 12b included in the robot 10 illustrated in FIG. 1. FIG. 3 is an enlarged view of a range surrounded by a broken line III in FIG. 2. FIG. 4 is a perspective view illustrating a state in which a support member 19 illustrated in FIG. 2 is fixed to an arm base 123 of the second arm 12b. In FIGS. 2 and 3, some components of the robot 10 are illustrated in a side view. In FIG. 4, a cover 124, a first endless belt 153, and a second endless belt 157, which will be described later, are not illustrated.

Although details will be described later, as illustrated in FIG. 1, a base 11, a first arm 12a, the second arm 12b, a shaft 13c, and an end effector 13d of the robot 10 are sequentially connected in this order. Hereinafter, in these connection paths, the base 11 side is referred to as a "proximal end side" or a "proximal end section", and the opposite side is referred to as a "distal end side" or a "distal end section".

In addition, in each of the drawings, an X-axis, a Y-axis, and a Z-axis are set as three axes orthogonal to each other with respect to a work space of the robot 10. Each of the axes is represented by an arrow, with a distal end side of the arrow being a "+ side" and a proximal end side of the arrow being a "- side". In the following description, for example, an "X-axis direction" includes both the positive direction and the negative direction of the X-axis. The same applies to a Y-axis direction and a Z-axis direction.

Further, in each of the drawings, a direction parallel to a third axis A3 which is an up-down movement axis and a rotation axis of a shaft 13c to be described later is defined as the Z-axis direction. In addition, in the Z-axis direction, a direction in which a distal end section of the shaft 13c on which the end effector 13d is mounted approaches the second arm 12b (a + side in the Z-axis direction) is referred to as "above", "upward", or "upper side", and the opposite direction (a - side in the Z-axis direction) is referred to as "below", "downward", or "lower side". In addition, an "upper end section" of a certain object refers to a portion including a certain range from the uppermost end of the object toward the lower side, and a "lower end section" of a certain object refers to a portion including a certain range from the lowermost end of the object toward the upper side.

In addition, movement of the shaft 13c to the + side in the Z-axis direction is referred to as "moving up", movement to the - side in the Z-axis direction is referred to as "moving down", and movement in the Z-axis direction is referred to as "moving up and down". In the present embodiment, the Z-axis direction is parallel to a vertical direction. However, the Z-axis direction is not necessarily parallel to the vertical direction, and may be inclined with respect to the vertical direction.

In the present specification, the term "parallel" includes not only a case where two objects are exactly parallel to each other, but also a case where one of the two objects is inclined within ±10° from a state where the two objects are exactly parallel to each other, that is, a case where the two objects are substantially parallel to each other. In the present specification, the term "orthogonal" includes not only a case where two objects are exactly orthogonal to each other, but also a case where one of the two objects is inclined within ±10° from a state where the two objects are exactly orthogonal to each other, that is, a case where the two objects are substantially orthogonal to each other.

To summarize with reference to FIG. 1, the robot system 1 according to the present embodiment includes the robot 10 and a control device 30 that controls driving of each section of the robot 10.

The robot 10 is a horizontal multi-joint robot (SCARA robot). For example, the robot 10 is used in each operation such as holding, transporting, assembling, processing, coating, and inspecting a workpiece such as an electronic component. However, the use and type of operation of the robot 10 are not limited to these described above.

The robot 10 includes the base 11, a robot arm 12 provided on the base 11, and a working head 13 provided at a distal end section of the robot arm 12.

The base 11 is fixed to a support such as a floor, a ceiling, a side wall, a column, a beam, a pedestal, or a frame, and supports the robot arm 12. Hereinafter, an example in which the robot 10 is a "ceiling-mounted type" in which the base 11 is attached to a support T1 such as a ceiling located above the robot arm 12 in the vertical direction will be described. However, the robot 10 may be a wall-mounted type in which the base 11 is attached to a support such as a side wall located at a lateral position of the robot arm 12 in a horizontal direction, or may be a floor-mounted type in which the base 11 is attached to a support such as a floor located below the robot 10 in the vertical direction.

The base 11 is provided with one or more connectors 11i for connecting equipment installed in the robot 10 to an external device such as the control device 30. The equipment installed in the robot 10 is not particularly limited, and examples thereof include a first driving section 14a, a second driving section 14b, a third driving section 14c, a fourth driving section 14d, and the end effector 13d, which will be described later. Further, the equipment installed in the robot 10 is not particularly limited, but may include, for example, sensors such as an angle sensor and an inertial sensor, a camera, a solenoid valve, and electronic boards such as a power supply board and a control board for these, which are not illustrated.

The equipment installed in the robot 10 and the connector 11i are connected to each other by one or more linear members (not illustrated) passing through the base 11 and the robot arm 12. In addition, the connector 11i and the external device are connected by a linear member passing through the outside of the robot 10.

Examples of the linear member include wiring and a long hollow member having flexibility. The wiring is not particularly limited, and examples thereof include electric wiring such as an electric cable and optical wiring such as an optical fiber. The external device performs operations such as transmitting and receiving signals to and from the equipment installed in the robot 10 via the wiring and the connector 11i. In addition, a fluid such as air flows inside the long hollow member, and the external device can supply the fluid to the equipment installed in the robot 10 such as the end effector 13d and can suck the fluid around the equipment via the long hollow member. The long hollow member is not particularly limited, and examples thereof include a tube, a pipe, a hose, and a duct.

The connector 11i may be a connector to which the electric wiring can be connected, a connector to which the optical wiring can be connected, or a connector to which the long hollow member can be connected. A plurality of linear members may be bundled. In addition, the linear member may be branched into a plurality of parts. In addition, a relay or a relay connector may be provided in the middle of the linear member.

The robot arm 12 is located below the base 11. The robot arm 12 includes the first arm 12a provided on the base 11, the second arm 12b provided on the first arm 12a, a first joint 12c, and a second joint 12d.

The first arm 12a is located below the base 11. A proximal end section of the first arm 12a is connected to the base 11 by the first joint 12c so as to be rotatable about a first axis A1. The first axis A1 is parallel to the Z-axis direction. The first arm 12a includes an arm base 121a extending along a direction parallel to an X-Y plane, and a housing section 121b that protrudes downward from the arm base 121a and houses a motor of the second driving section 14b which will be described later. However, the specific shape of the first arm 12a is not limited to the shape described above and illustrated in the drawings.

The second arm 12b is located below the first arm 12a. A proximal end section of the second arm 12b is connected to a distal end section of the first arm 12a by the second joint 12d so as to be rotatable about a second axis A2. The second axis A2 is parallel to the first axis A1. Details of the structure of the second arm 12b will be described later.

The working head 13 is provided at a distal end section of the second arm 12b. The working head 13 includes a spline nut 13a and a ball screw nut 13b which are coaxially disposed on the third axis A3, and the shaft 13c which is inserted through the spline nut 13a and the ball screw nut 13b. The third axis A3 is parallel to the first axis A1 and the second axis A2.

The shaft 13c is also referred to as a spline shaft or a working shaft. The shaft 13c extends along the third axis A3. The shaft 13c is configured to rotate about the third axis A3 and to move up and down along the third axis A3. To be specific, a rotation of the spline nut 13a causes the shaft 13c to rotate about the third axis A3. Further, a rotation of the ball screw nut 13b causes the shaft 13c to move up and down along the third axis A3.

The end effector 13d is mounted on a lower end section (the distal end section) of the shaft 13c. The end effector 13d is detachable from the shaft 13c. The type of the end effector 13d is not particularly limited, and examples thereof include a hand, a drill, and a suction head.

An upper end section of the shaft 13c is provided with an upper stopper 131 that prevents or reduces coming off of the shaft 13c downward from the second arm 12b when the shaft 13c is lowered. Similarly, the lower end section of the shaft 13c is provided with a lower stopper 132 that prevents or reduces coming off of the shaft 13c upward from the second arm 12b when the shaft 13c is raised. A range in which the shaft 13c can be lowered is limited by a control program of the robot 10 such that the shaft 13c is not lowered below a position in a state where the upper stopper 131 is separated upward from a sixth pulley 162 to be described later by a predetermined clearance. Further, a range in which the shaft 13c can be raised is limited by the control program of the robot 10 such that the shaft 13c is not raised above a position in a state where the lower stopper 132 is separated downward from the spline nut 13a by a predetermined clearance. Hereinafter, a movement distance of the shaft 13c in the direction parallel to the third axis A3 from a state where the shaft 13c is raised to a highest position to a state where the shaft 13c is lowered to a lowest position is also simply referred to as a "maximum stroke length by which the shaft 13c can move up and down". That is, the maximum stroke length by which the shaft 13c can move up and down corresponds to the difference in the Z-axis direction between the highest position and the lowest position of the shaft 13c.

Note that the state in which the shaft 13c is lowered to the lowest position may be a state in which the upper stopper 131 is in contact with an upper surface of the sixth pulley 162. Further, the state in which the shaft 13c is raised to the highest position may be a state in which the lower stopper 132 is in contact with a lower surface of the spline nut 13a. In addition, a user of the robot 10 may further impose a limitation on the length by which the shaft 13c can move up and down such that the shaft 13c moves up and down by a length shorter than the maximum stroke length by which the shaft 13c can move up and down, depending on the position of an object such as a workpiece disposed in the work space. However, in this case as well, the maximum stroke length by which the shaft 13c can move up and down refers to the original stroke length by which the shaft 13c can move up and down before the user sets the limitation.

The robot 10 further includes the first driving section 14a, the second driving section 14b, the third driving section 14c, and the fourth driving section 14d.

The first driving section 14a rotates the first arm 12a about the first axis A1 with respect to the base 11. The first driving section 14a is housed in the base 11. The first driving section 14a includes a motor that generates power for rotating the first arm 12a with respect to the base 11, and a transmission section (not illustrated) that transmits a rotation of the motor to the first arm 12a. The transmission section is not particularly limited, and examples thereof include a wrapping transmission device such as a belt transmission device.

The second driving section 14b rotates the second arm 12b about the second axis A2 with respect to the first arm 12a. The second driving section 14b is housed in the first arm 12a. The second driving section 14b includes a motor that generates power for rotating the second arm 12b with respect to the first arm 12a, and a transmission section (not illustrated) that transmits a rotation of the motor to the second arm 12b. As described above, the motor is housed in the housing section 121b of the first arm 12a. Examples of the transmission section include the same device as that exemplified in the first driving section 14a.

The third driving section 14c rotates the shaft 13c about the third axis A3. The third driving section 14c is housed in the second arm 12b. The third driving section 14c includes a first motor 141a that generates power for rotating the shaft 13c, and a first transmission section 150 that decelerates a rotation of the first motor 141a to transmit the decelerated rotation to the shaft 13c. A first brake 141b is provided on an output shaft of the first motor 141a. The first brake 141b is not particularly limited, but includes, for example, a magnetic brake or the like. Note that the robot 10 does not necessarily include the first brake 141b. Details of the first transmission section 150 will be described later.

The fourth driving section 14d moves the shaft 13c up and down along the third axis A3. The fourth driving section 14d is housed in the second arm 12b. The fourth driving section 14d includes a second motor 142a that generates power for moving the shaft 13c up and down, and a second transmission section 160 that decelerates a rotation of the second motor 142a to transmit the decelerated rotation to the shaft 13c. A second brake 142b is provided on an output shaft of the second motor 142a. The second brake 142b is not particularly limited, and examples thereof include the same brake as that exemplified in the third driving section 14c. Note that the robot 10 does not necessarily include the second brake 142b. Details of the second transmission section 160 will be described later.

The control device 30 is located outside the robot 10. However, the control device 30 may be housed in the base 11. The control device 30 includes a storage section, a control section, and a communication section. These sections are connected to each other via a bus.

The storage section includes memories such as a random access memory (RAM) and a read only memory (ROM). The storage section stores various programs such as a control program for controlling the operation of the robot 10 and various data.

The control section includes at least one processor such as a central processing unit (CPU). The control section reads and executes the various programs stored in the storage section.

The communication section includes various interfaces capable of communicating with the robot 10 and an external device such as a teaching device (not illustrated). The communication section transmits and receives information and signals to and from external devices. The communication by the communication section may be communication via a network such as a local area network (LAN) or the Internet. The communication mode may be wired or wireless.

Next, the structure of the second arm 12b will be described in detail.

The second arm 12b includes a connecting section 122a rotatably connected to a distal end section of the arm base 121a of the first arm 12a via the second joint 12d, and a casing 122b that houses the third driving section 14c and the fourth driving section 14d and is provided with the working head 13. The casing 122b includes the arm base 123 connected to a lower end section of the connecting section 122a, and the cover 124 disposed above the arm base 123 and at a lateral position of the connecting section 122a and detachably attached to the arm base 123.

Hereinafter, a direction parallel to the first axis A1, the second axis A2, and the third axis A3 is also referred to as a "first direction D1", a direction orthogonal to the first direction D1 and directed from the second axis A2 to the third axis A3 is also referred to as a "second direction D2", and a direction orthogonal to the first direction D1 and the second direction D2 is also referred to as a "third direction D3". The first direction D1 is also a direction parallel to the Z-axis direction. The second direction D2 and the third direction D3 are parallel to the X-Y plane, and change their orientations in accordance with a rotation of the second arm 12b. In addition, each of the directions D1, D2, and D3 is indicated by an arrow, a distal end side of the arrow being a "+ side", and a proximal end side of the arrow being a "-side". Hereinafter, the lengths in the first direction D1 of the second arm 12b and the members installed in the second arm 12b are also referred to as "heights". Hereinafter, the lengths in the third direction D3 of the second arm 12b and the members installed in the second arm 12b are also referred to as "widths".

As illustrated in FIG. 2, the connecting section 122a is hollow and extends along the second axis A2. The connecting section 122a has, for example, a cylindrical shape. The height of the connecting section 122a is set to a height at which the shaft 13c does not come into contact with the first arm 12a when the second arm 12b is rotated in the state where the shaft 13c is raised to the highest position. Therefore, in the present embodiment, the second arm 12b can rotate 360 degrees with respect to the first arm 12a.

However, the configuration of the connecting section 122a is not limited to the configuration described above and illustrated in the drawings. For example, an upper end section of the connecting section 122a may be fixed to the arm base 121a of the first arm 12a, and the lower end section of the connecting section 122a may be connected to a proximal end section of the arm base 123 of the second arm 12b via the second joint 12d so as to be rotatable about the second axis A2. In addition, the connecting section 122a may include a first portion that is fixed to the arm base 121a and extends along the first axis A1, and a second portion that is rotatably connected to a lower end of the first portion about the second axis A2, is fixed to the arm base 123, and extends along the first axis A1.

The arm base 123 is hollow. The shape of the arm base 123 is an elongated shape extending along the second direction D2, for example, a rectangular parallelepiped shape. The arm base 123 includes an upper wall 123a, a lower wall 123b, and a side wall 123c. The upper wall 123a is parallel to the X-Y plane. The lower wall 123b is located below the upper wall 123a and is parallel to the X-Y plane. The side wall 123c is located between the upper wall 123a and the lower wall 123b and extends in the first direction D1 (the Z-axis direction).

The connecting section 122a is made of a material having a strength enough to support the casing 122b. The arm base 123 is made of a material having a strength enough to support the internal components of the second arm 12b and the shaft 13c. The constituent material of the connecting section 122a and the arm base 123 is not particularly limited, and examples thereof include various metal materials, various resin materials, various ceramic materials, and materials obtained by combining two or more of these materials. Examples of the metal materials include, but are not particularly limited to, iron, stainless steel, aluminum, copper, titanium, and alloys containing two or more of these metals.

The cover 124 is formed of, for example, a plate material formed into a desired three-dimensional shape. The cover 124 covers an upper section of the arm base 123, and has a shape in which a lower section and a side section on the connecting section 122a side are opened. The cover 124 forms an internal space with the arm base 123 by being mounted on the arm base 123.

Further, the cover 124 is provided with one or more connectors 124i for connecting equipment installed on the outer surface of the second arm 12b or the shaft 13c to the linear member extending from the connector 11i of the base 11. Examples of the equipment installed on the outer surface of the second arm 12b or the shaft 13c include, but are not particularly limited to, the end effector 13d, a sensor, a camera, and a solenoid valve (which are not illustrated).

The cover 124 may be made of a material having substantially the same strength as the connecting section 122a and the arm base 123, may be made of a flexible or elastic material which is slightly deformed when force is applied thereto, or may be made of a material obtained by combining these materials. The constituent material of the cover 124 is not particularly limited, and examples thereof include materials similar to the materials exemplified for the connecting section 122a and the arm base 123.

An end section (distal end section) of the arm base 123 on a + side in the second direction D2 is provided with a through hole passing through the upper wall 123a and the lower wall 123b along the third axis A3. In addition, a through hole passing through the cover 124 in a thickness direction along the third axis A3 is provided in an end section of the cover 124 on the + side in the second direction D2. The shaft 13c is inserted through these through holes. Then, the upper end section of the shaft 13c is exposed from the cover 124 in the state where the shaft 13c is raised to the highest position. Further, the upper end section of the shaft 13c is housed in the cover 124 in the state where the shaft 13c is lowered to the lowest position. However, the cover 124 may have a shape that always covers the upper end section of the shaft 13c.

The spline nut 13a is disposed below the arm base 123. The ball screw nut 13b is disposed from above the arm base 123 to the inside of the arm base 123. However, the specific positions of the spline nut 13a and the ball screw nut 13b are not limited to the above.

The first motor 141a and the second motor 142a are located on the arm base 123 and in the cover 124. Here, "the first motor 141a and the second motor 142a are located on the arm base 123" means that most of the first motor 141a and the second motor 142a are located on the arm base 123, and for example, a part of the first motor 141a or the second motor 142a may protrude to the inside of the arm base 123.

The first motor 141a is disposed between the connecting section 122a and the shaft 13c. The first motor 141a is fixed to the upper wall 123a of the arm base 123 via a support 141c in a posture in which the output shaft protrudes downward from a housing of the first motor 141a. The first brake 141b is disposed below the first motor 141a in the first direction D1 and around the output shaft.

Further, the second motor 142a is disposed between the first motor 141a and the shaft 13c. Therefore, the connecting section 122a, the first motor 141a, the second motor 142a, and the shaft 13c are arranged in this order toward the + side in the second direction D2. The second motor 142a is fixed to the upper wall 123a of the arm base 123 via a support 142c such that an upper surface of the second motor 142a is located at a position higher than an upper surface of the first motor 141a, that is, above the upper surface of the first motor 141a, in a posture in which the output shaft protrudes downward from a housing of the second motor 142a. The second brake 142b is disposed below the second motor 142a in the first direction D1 and around the output shaft.

The separation distance between the output shaft of the first motor 141a and the connecting section 122a in the second direction D2 is shorter than the separation distance between the output shaft of the first motor 141a and the shaft 13c in the second direction D2. Similarly, the separation distance between the output shaft of the second motor 142a and the connecting section 122a in the second direction D2 is shorter than the separation distance between the output shaft of the second motor 142a and the shaft 13c in the second direction D2. Thus, the first motor 141a and the second motor 142a can be brought closer to the second axis A2. Thus, the center of gravity of the second arm 12b including the third driving section 14c and the fourth driving section 14d can be closer to the second axis A2. Thus, the moment of inertia when the second arm 12b rotates can be reduced. As a result, it is possible to rapidly rotate the second arm 12b and to cause the robot 10 to rapidly perform a desired operation.

As described above, the first motor 141a and the second motor 142a are disposed side by side in the second direction D2. Therefore, a width of the second arm 12b can be made smaller than in a case where the first motor 141a and the second motor 142a are disposed side by side in the third direction D3. Thus, it is possible to prevent or reduce an interference between the second arm 12b and an object disposed in the work space of the robot 10 when the second arm 12b rotates.

Incidentally, in the floor-mounted type robot, the first arm 12a and the second arm 12b are provided above the base 11, the shaft 13c that moves up and down along the third axis A3 is provided at the distal end section of the second arm 12b, and the end effector 13d is disposed below the shaft 13c. Therefore, in the floor-mounted type robot, since the end effector 13d and the base 11 are located below the second arm 12b, the second arm 12b may be restricted to rotate in an angle range in which the end effector 13d of the shaft 13c and the base 11 do not interfere with each other. On the other hand, in the ceiling-mounted type robot 10, the first arm 12a, the second arm 12b, and the shaft 13c are disposed below the base 11. Therefore, in the ceiling-mounted type robot 10, since only the end effector 13d is located below the second arm 12b, the angle range in which the second arm 12b can rotate tends to be wider than that of the floor-mounted type robot, and is 360 degrees in the present embodiment.

In the ceiling-mounted type robot 10, in order to sufficiently utilize the angle range in which the second arm 12b can rotate, the second arm 12b is required to have as small a width as possible so as to be less likely to interfere with an object or the like disposed in the work space of the robot 10. Therefore, in the ceiling-mounted type robot 10, it is particularly beneficial to reduce the width of the second arm 12b.

The first transmission section 150 is housed in the arm base 123. Here, "the first transmission section 150 is housed in the arm base 123" means that most of the first transmission section 150 is located in the arm base 123, and a part of the first transmission section 150 may protrude to the outside of the arm base 123. The first transmission section 150 is configured by a two-stage deceleration-type belt transmission device. The first transmission section 150 includes a first pulley 151, a second pulley 152, the first endless belt 153, a shaft member 154, a third pulley 155, a fourth pulley 156, and the second endless belt 157.

In the present specification, the term "pulley" includes a driver or a follower in the belt transmission device, and is also referred to as a belt pulley. Further, an "endless belt" is flexible and annular, and is wound around at least two pulleys in the belt transmission device to transmit power from one of the two pulleys to the other. The pulleys 151, 152, 155, and 156 are not particularly limited, and examples thereof include a synchronous pulley, a V-pulley, and a flat pulley. The endless belts 153 and 157 are not particularly limited, and examples thereof include a synchronous belt used in combination with a synchronous pulley, a V-belt used in combination with a V-pulley, and a flat belt used in combination with a flat pulley.

The constituent material of the pulleys 151, 152, 155, and 156 and the shaft member 154 is not particularly limited, and examples thereof include various resin materials, various metal materials, various ceramic materials, and materials obtained by combining two or more of these materials. The constituent material of the endless belts 153 and 157 is not particularly limited, and examples thereof include various resin materials and various rubber materials. The material of the pulleys 151, 152, 155, and 156 in the present embodiment is an alloy containing aluminum, which allows them to be lighter than materials such as iron.

In the following description, the "outer diameter" of each of the pulleys 151, 152, 155, and 156 refers to the diameter of a portion of each of the pulleys 151, 152, 155, and 156 around which the endless belt 153 or 157 is wound. Thus, for example, when the pulleys 151, 152, 155, and 156 are synchronous pulleys, the "outer diameter" of each of the pulleys 151, 152, 155, and 156 refers to the diameter of a portion on which a plurality of teeth are provided. In this case, the "outer diameter" of each of the pulleys 151, 152, 155, and 156 is not particularly limited, and examples thereof include a diameter of a circle passing through the tips of the plurality of teeth, that is, a "outside diameter" in JIS B 1859:2020, a diameter of a circle passing through the pitch points, that is, a "pitch diameter" in JIS B 1859:2020, and the like.

In the following description, the "length in the first direction D1" of each of the pulleys 151, 152, 155, and 156 refers to the length in the first direction D1 of a portion of each of the pulleys 151, 152, 155, and 156 around which the endless belt 153 or 157 is wound. Therefore, for example, when the pulleys 151, 152, 155, and 156 are synchronous pulleys, the "length in the first direction D1" of each of the pulleys 151, 152, 155, and 156 refers to the length in the first direction D1 of a portion in which the teeth are provided. In this case, the "length in the first direction D1" of each of the pulleys 151, 152, 155, and 156 is not particularly limited, and examples thereof include a "minimum pulley width" in JIS B 1859:2020, or the like. When the pulleys 151, 152, 155, and 156 are flanged pulleys, the length of a flange in the first direction D1 is not included in the "length in the first direction D1" of each of the pulleys 151, 152, 155, and 156.

In the following description, the "width" of each of the endless belts 153 and 157 refers to the maximum length of each of the endless belts 153 and 157 in the direction in which the rotation axis of the pulleys 151, 152, 155, or 156 extends. Therefore, for example, when the endless belts 153 and 157 are synchronous belts, the width of each of the endless belts 153 and 157 refers to the maximum length of a portion in which the teeth are provided. In this case, the "width" of each of the endless belts 153 and 157 is not particularly limited, and refers to, for example, a "width" in JIS B 1859:2020.

A through hole 123h passing through the upper wall 123a in the thickness direction is provided in a portion of the upper wall 123a of the arm base 123 which is located below the first motor 141a and the second motor 142a in the first direction D1. The first pulley 151 corresponds to a first stage input pulley. The first pulley 151 is located in the arm base 123 and below the first motor 141a in the first direction D1. The first pulley 151 is fixed to the output shaft of the first motor 141a on the arm base 123 via a connecting member 151a disposed in the through hole 123h. The first pulley 151 rotates in conjunction with a rotation of the output shaft of the first motor 141a.

As illustrated in FIGS. 1 and 2, the second pulley 152 corresponds to a first stage output pulley. The outer diameter of the second pulley 152 is larger than the outer diameter of the first pulley 151. The second pulley 152 is located in the arm base 123 and between the first pulley 151 and the shaft 13c.

The third pulley 155 corresponds to a second stage input pulley. The outer diameter of the third pulley 155 is larger than the outer diameter of the first pulley 151 and smaller than the outer diameter of the second pulley 152. The third pulley 155 is located in the arm base 123, and is coaxially fixed to the second pulley 152.

The shaft member 154 corresponds to a rotation axis of the second pulley 152 and the third pulley 155. The shaft member 154 extends along the first direction D1. The shaft member 154 is provided with the second pulley 152 and the third pulley 155. The shaft member 154 extends from a position higher than the arm base 123 into the arm base 123.

The shaft member 154, the second pulley 152, and the third pulley 155 are integrally formed in the present embodiment. Hereinafter, a member that integrally configures the shaft member 154, the second pulley 152, and the third pulley 155 is also referred to as an "intermediate member 150a". Note that two of the shaft member 154, the second pulley 152, and the third pulley 155 may be separate bodies, or three of these may be separate bodies.

The intermediate member 150a is rotatably supported by the arm base 123 of the second arm 12b via a first bearing 17a, a second bearing 17b, a bearing holder 18, and the support member 19. Each of the first bearing 17a and the second bearing 17b rotatably supports the shaft member 154. The bearing holder 18 holds the first bearing 17a and the second bearing 17b. The support member 19 is fixed to the upper wall 123a of the arm base 123 and supports the bearing holder 18. Details of the specific configurations, shapes, and the like of the intermediate member 150a, the first bearing 17a, the second bearing 17b, the bearing holder 18, and the support member 19 will be described later.

The intermediate member 150a is located below the second motor 142a in the first direction D1. That is, the second pulley 152, the third pulley 155, and the shaft member 154 are located below the second motor 142a in the first direction D1. In the present specification, "one of two objects is located below the other in the first direction D1" means that the one is located below the other and that at least a part of the one and at least a part of the other overlap each other when viewed in projection along the first direction D1.

In this way, since the intermediate member 150a is located below the second motor 142a in the first direction D1, it is possible to bring the intermediate member 150a closer to the second axis A2, compared to a case where the intermediate member 150a is located between the second motor 142a and the shaft 13c when viewed from the first direction D1. This makes it possible to reduce the moment of inertia when the second arm 12b rotates. In addition, since the intermediate member 150a is located below the second motor 142a in the first direction D1, it is possible to prevent or reduce an increase in the width of the second arm 12b compared to, for example, a case where the intermediate member 150a is separated from the second motor 142a in the third direction D3 when viewed from the first direction D1. That is, due to the arrangement of the intermediate member 150a described above, it is possible to reduce the moment of inertia when the second arm 12b rotates while preventing or reducing an increase in the width of the second arm 12b. As described above, in the ceiling-mounted type robot 10, the second arm 12b is required to have as small a width as possible. Therefore, in the ceiling-mounted type robot 10, it is particularly beneficial to dispose the intermediate member 150a below the second motor 142a in the first direction D1. In the present embodiment, the intermediate member 150a is disposed coaxially with the second motor 142a. However, the intermediate member 150a need not be disposed coaxially with the second motor 142a.

The fourth pulley 156 corresponds to a second stage output pulley. The fourth pulley 156 is located in the arm base 123, and is disposed coaxially with the shaft 13c and the spline nut 13a. The fourth pulley 156 is located above the spline nut 13a and is fixed to the spline nut 13a.

The first endless belt 153 corresponds to a first stage endless belt. The first endless belt 153 is wound around the first pulley 151 and the second pulley 152. The second endless belt 157 corresponds to a second stage endless belt. The second endless belt 157 is wound around the third pulley 155 and the fourth pulley 156. The first endless belt 153 and the second endless belt 157 are housed in the arm base 123 of the second arm 12b.

As described above, when the output shaft of the first motor 141a rotates, the first pulley 151 rotates. As a result, the first endless belt 153 rotates. Accordingly, the intermediate member 150a, that is, the shaft member 154, the second pulley 152, and the third pulley 155 rotate. As a result, the second endless belt 157 rotates. This causes the fourth pulley 156 and the spline nut 13a to rotate. As a result, the shaft 13c rotates about the third axis A3.

Since the outer diameter of the second pulley 152 is larger than the outer diameter of the first pulley 151 and the outer diameter of the fourth pulley 156 is larger than the outer diameter of the third pulley 155, the rotation of the first motor 141a can be decelerated in two stages and transmitted to the shaft 13c. Thus, sufficient torque can be applied to the shaft 13c. In particular, when the end effector 13d is brought into contact with the workpiece and the workpiece is processed while the end effector 13d rotating, when the end effector 13d having a relatively large mass is rotated, or the like, the required torque is larger than when the shaft 13c is moved up and down. In the present embodiment, since the first transmission section 150 includes the two-stage deceleration-type belt transmission device, it is possible to decelerate the rotation of the first motor 141a and apply sufficient torque to the shaft 13c and the end effector 13d. Further, in a gear device such as a speed reducer including gears, since the gears are worn by being brought into contact with each other, a material having high strength and weight such as iron is used for the purpose of improving wear resistance. In contrast, since the belt transmission device does not require wear resistance as compared with the gears, it is possible to use a lightweight material, and if the belt transmission device is configured in this way, the belt transmission device is lightweight as compared with the gear device. Therefore, by configuring the first transmission section 150 by a belt transmission device, it is possible to apply sufficient torque to the shaft 13c and the end effector 13d, and to reduce the moment of inertia when the second arm 12b rotates.

The reduction ratio of the first stage of the belt transmission device configuring the first transmission section 150 is not particularly limited, but is preferably 1.2 or more and 5 or less, and more preferably 2.0 or more and 3 or less. The reduction ratio of the second stage of the belt transmission device configuring the first transmission section 150 is not particularly limited, but is preferably 1.5 or more and 5 or less, and more preferably 2.0 or more and 3 or less.

The torque applied to the second endless belt 157 is larger than the torque applied to the first endless belt 153. In the present embodiment, as illustrated in FIG. 3, the length (height) of the third pulley 155 in the first direction D1 is larger than the length (height) of the second pulley 152 in the first direction D1. A width W2 of the second endless belt 157 is larger than a width W1 of the first endless belt 153. This makes it possible to increase the contact area between the second endless belt 157 and the third pulley 155 and the contact area between the second endless belt 157 and the fourth pulley 156 as compared with a case where the width W2 is equal to or smaller than the width W1. As a result, it is possible to prevent or reduce a displacement or idling of the second endless belt 157 with respect to the third pulley 155 or the fourth pulley 156. In particular, when the third pulley 155 and the fourth pulley 156 are synchronous pulleys, and the second endless belt 157 is a synchronous belt, this prevents or reduces tooth skipping of the second endless belt 157.

Here, the width W1 and the width W2 have the same unit. At this time, W2/W1 is not particularly limited, but is preferably 1.2 or more and 3 or less, and more preferably 1.4 or more and 2.7 or less. By setting the W2/W1 to be equal to or greater than the lower limit value described above, it is possible to sufficiently ensure the contact area between the second endless belt 157 and the third pulley 155 and the contact area between the second endless belt 157 and the fourth pulley 156. As a result, it is possible to prevent or reduce a displacement or idling of the second endless belt 157 with respect to the third pulley 155 and the fourth pulley 156. In addition, by setting the W2/W1 to be equal to or less than the upper limit value described above, it is possible to sufficiently ensure the contact area between the first endless belt 153 and the first pulley 151 and the contact area between the first endless belt 153 and the second pulley 152 while preventing or reducing an increase in the height of the first transmission section 150. As a result, it is possible to prevent or reduce an increase in the height of the second arm 12b. By preventing or reducing an increase in the height of the second arm 12b, it is possible to prevent or reduce a decrease in the maximum stroke length by which the shaft 13c can move up and down. As a result, it is possible to widen the types of work and the range of work that can be performed by the robot 10. In addition, it is possible to widen the range of selection of the end effector 13d to be mounted on the shaft 13c and the workpiece that is the operation target.

As illustrated in FIG. 2, the second transmission section 160 is disposed above the arm base 123 and in the cover 124. The second transmission section 160 is configured by a one-stage deceleration-type belt transmission device, and includes a fifth pulley 161, the sixth pulley 162, and a third endless belt 163.

The fifth pulley 161 corresponds to an input pulley. The fifth pulley 161 is fixed to the output shaft of the second motor 142a, and rotates in conjunction with the output shaft of the second motor 142a. The sixth pulley 162 corresponds to an output pulley. The sixth pulley 162 is disposed coaxially with the shaft 13c and the ball screw nut 13b. The sixth pulley 162 is located above the ball screw nut 13b and is fixed to the ball screw nut 13b. The third endless belt 163 is wound around the fifth pulley 161 and the sixth pulley 162.

As described above, when the output shaft of the second motor 142a rotates, the fifth pulley 161 rotates. As a result, the third endless belt 163 rotates. This causes the sixth pulley 162 and the ball screw nut 13b to rotate. As a result, the shaft 13c moves up and down along the third axis A3 in accordance with the rotation direction of the ball screw nut 13b. Since the outer diameter of the sixth pulley 162 is larger than the outer diameter of the fifth pulley 161, the rotation of the second motor 142a can be decelerated and the decelerated rotation can be transmitted to the shaft 13c. Thus, a sufficient speed and torque for moving the shaft 13c up and down can be applied. Note that the outer diameter of the sixth pulley 162 and the outer diameter of the fifth pulley 161 may be the same.

Next, the shapes and configurations of the intermediate member 150a, the first bearing 17a, the second bearing 17b, the bearing holder 18, and the support member 19 will be described.

As illustrated in FIG. 3, the shaft member 154 included in the intermediate member 150a includes a first columnar section 154a that includes a lower end of the intermediate member 150a and extends along the first direction D1, and a second columnar section 154b that is continuous with an upper end of the first columnar section 154a, has a smaller diameter than that of the first columnar section 154a, and includes an upper end of the intermediate member 150a. That is, in the intermediate member 150a, the shaft member 154 extends from the upper end to the lower end of the intermediate member 150a. However, the shape of the shaft member 154 is not particularly limited to the shape described above and illustrated in the drawings. For example, the diameter of the shaft member 154 may be constant in the first direction D1.

The second columnar section 154b is provided with the first bearing 17a and the second bearing 17b. In the present embodiment, a lower end section of the shaft member 154 is not supported by a bearing. The second columnar section 154b is inserted through the insides of the first bearing 17a and the second bearing 17b, and is fixed to an inner ring of the first bearing 17a and an inner ring of the second bearing 17b. The inner ring of the first bearing 17a is in contact with an upper surface of the first columnar section 154a. The second bearing 17b is located above the first bearing 17a and is spaced apart from the first bearing 17a.

A collar 17c is disposed between the first bearing 17a and the second bearing 17b. Further, an upper end section of the second columnar section 154b of the shaft member 154 protrudes upward from the second bearing 17b and has a male screw shape. A nut 17d is screwed onto an upper end section of the shaft member 154 and is in contact with an upper surface of the inner ring of the second bearing 17b. Thus, a preload can be applied to the first bearing 17a and the second bearing 17b. In this way, by providing two bearings on an upper section of the shaft member 154, even if only one of both end sections of the shaft member 154 is supported, it is possible to prevent or reduce wobbling of the shaft member 154 during rotation. Further, by applying the preload to the first bearing 17a and the second bearing 17b, it is possible to prevent or reduce a change in the position of the shaft member 154 in the radial direction and the axial direction.

Each of the first bearing 17a and the second bearing 17b is not particularly limited, and examples thereof include a rolling bearing such as a deep groove ball bearing, an angular contact ball bearing, a cylindrical roller bearing, and a needle roller bearing. However, each of the first bearing 17a and the second bearing 17b may be configured by a slide bearing. The type of the first bearing 17a and the type of the second bearing 17b may be the same type or different types. The dimensions of the first bearing 17a and the second bearing 17b, such as the inside diameters, the outer diameters, and the widths, may be the same or different.

Further, the number of bearings provided on the shaft member 154 is not limited to two as in the present embodiment. The number of bearings provided on the shaft member 154 may be one, or three or more. Further, the second bearing 17b may be disposed below the first bearing 17a.

The separation distance between the first bearing 17a and the second bearing 17b is L1, and the total length of the shaft member 154 is L2. The separation distance L1 and the total length L2 have the same unit. At this time, L1/L2 × 100 [%] is not particularly limited, but is preferably 5% or more and 10% or less, and more preferably 6% or more and 9.5% or less. By setting the L1/L2 × 100 to be equal to or greater than the lower limit value described above, it is possible to sufficiently ensure the separation distance L1 between the first bearing 17a and the second bearing 17b. As a result, even if only one of both end sections of the shaft member 154 is supported, it is possible to prevent or reduce wobbling of the shaft member 154 during rotation. In addition, by setting the L1/L2 × 100 to be equal to or less than the upper limit value described above, it is possible to sufficiently ensure the lengths of the portions in which the second pulley 152 and the third pulley 155 are provided in the shaft member 154, and to prevent or reduce an increase in the total length L2 of the shaft member 154. As a result, it is possible to prevent or reduce an increase in the height of the second arm 12b.

Here, a "first condition" is that the value of the L1/L2 × 100 [%] is 5% or more and 10% or less. In addition, a "second condition" is that the W2/W1 described above is 1.2 or more and 3 or less. It is preferable that the robot 10 satisfies both the first condition and the second condition. By satisfying both the first condition and the second condition, a synergistic effect of the two is exhibited, and the effect of preventing or reducing an increase in the height of the second arm 12b becomes more pronounced.

The first bearing 17a and the second bearing 17b are held by the bearing holder 18. The first bearing 17a and the second bearing 17b are provided on the second columnar section 154b corresponding to the upper section of the shaft member 154, and the second pulley 152 and the third pulley 155 are provided on the first columnar section 154a corresponding to a lower section of the shaft member 154. The third pulley 155 is located below the second pulley 152. Therefore, in the present embodiment, the bearing holder 18, the second pulley 152, and the third pulley 155 are arranged in this order from the upper side to the lower side in the first direction D1.

Accordingly, as illustrated in FIG. 2, the fourth pulley 156 to which the power is transmitted from the third pulley 155 via the second endless belt 157 can be disposed in a lower section of the internal space of the arm base 123. If the third pulley 155 is located above the second pulley 152, the fourth pulley 156 will be located higher than in the present embodiment, and the ball screw nut 13b, the second transmission section 160, and the second motor 142a will also be located higher accordingly. On the other hand, in this case, since the position of the lower wall 123b of the second arm 12b does not substantially change, the maximum stroke length by which the shaft 13c can move up and down is shortened. Therefore, by disposing the third pulley 155 below the second pulley 152, it is possible to increase the maximum stroke length by which the shaft 13c can move up and down compared to a case where the third pulley 155 is located above the second pulley 152.

As illustrated in FIG. 3, at least a part of the bearing holder 18 is housed in the arm base 123 of the second arm 12b. In the present embodiment, an upper surface of the bearing holder 18 is flush with an upper surface of the upper wall 123a of the arm base 123. However, the upper surface of the bearing holder 18 may be located below or above the upper surface of the upper wall 123a of the arm base 123. The bearing holder 18 has a cylindrical shape. The bearing holder 18 includes a first cylindrical section 181, a second cylindrical section 182, and a tapered section 183.

The first cylindrical section 181 extends along the first direction D1. The first bearing 17a is disposed in an internal space of the first cylindrical section 181, and an outer ring of the first bearing 17a is fixed to the first cylindrical section 181. At least a part of the first cylindrical section 181 is housed in a recessed section 152a of the second pulley 152 which will be described later.

The tapered section 183 is located between the first cylindrical section 181 and the second cylindrical section 182 and extends along the first direction D1. The tapered section 183 is hollow and is continuous with an upper end of the first cylindrical section 181 and a lower end of the second cylindrical section 182. The outer diameter of the tapered section 183 gradually increases upward. The tapered section 183 is exposed from the recessed section 152a. However, the tapered section 183 may be housed in the recessed section 152a.

The second cylindrical section 182 is continuous with an upper end of the tapered section 183 and extends along the first direction D1. The second cylindrical section 182 is connected to the first cylindrical section 181 via the tapered section 183. The second bearing 17b is disposed in an internal space of the second cylindrical section 182, and an outer ring of the second bearing 17b is fixed to the second cylindrical section 182. The outer diameter of the second cylindrical section 182 is larger than the outer diameter of the first cylindrical section 181. The second cylindrical section 182 is exposed from the recessed section 152a.

The upper end section of the shaft member 154 protrudes upward from the second cylindrical section 182. That is, the end section of the shaft member 154 opposite to the end section of the shaft member 154 on which the second pulley 152 and the third pulley 155 are provided protrudes from the bearing holder 18. This allows the bearing holder 18 to be located lower with respect to the shaft member 154 as compared with a case where the upper end section of the shaft member 154 is covered with the bearing holder 18. Therefore, as compared with the case where the upper end section of the shaft member 154 is covered with the bearing holder 18, it is possible to shorten the length in the first direction D1 of an assembly of the intermediate member 150a and the bearing holder 18. In addition, the operation of screwing the nut 17d onto the upper end section of the shaft member 154 to fix the inner ring of the first bearing 17a to the shaft member 154 and fix the inner ring of the second bearing 17b to the shaft member 154 is facilitated.

The second cylindrical section 182 is fixed to the support member 19 by screwing or the like. As described above, the outer diameter of the second cylindrical section 182 is larger than the outer diameter of the first cylindrical section 181. Therefore, it is possible to sufficiently ensure the thickness of the second cylindrical section 182 in the radial direction while housing the first cylindrical section 181 in the recessed section 152a of the second pulley 152 which will be described later, and to provide a screw hole or the like for fixing to the support member 19 in the second cylindrical section 182. Further, it is possible to increase the rigidity of the joint portion between the second cylindrical section 182 and the support member 19. However, the second cylindrical section 182 may be directly fixed to the second arm 12b instead of being indirectly fixed to the second arm 12b via the support member 19.

The bearing holder 18 is made of a material having a strength enough to hold the first bearing 17a and the second bearing 17b. Examples of such a material include, but are not particularly limited to, various metal materials and various resin materials.

However, the shape of the bearing holder 18 is not limited to the shape described above and illustrated in the drawings. For example, the tapered section 183 need not be provided in the bearing holder 18, and a stepped section generated by an outer diameter difference between the first cylindrical section 181 and the second cylindrical section 182 may be provided in the bearing holder 18. In addition, the shape of the bearing holder 18 may be a cylindrical shape in which the outer diameter is constant in the first direction D1.

As illustrated in FIGS. 3 and 4, the support member 19 has a shape of a flat plate, which is parallel to the X-Y plane and has a longitudinal direction in the third direction D3. The support member 19 is disposed on the upper wall 123a of the arm base 123 of the second arm 12b, and is fixed to the upper wall 123a of the arm base 123. To be specific, an end section of the support member 19 on a - side in the third direction D3 is fixed by screwing or the like to a portion of the arm base 123 that is located further on the - side in the third direction D3 than the through hole 123h. An end section of the support member 19 on a + side in the third direction D3 is fixed by screwing or the like to a portion of the arm base 123 that is located further on the + side in the third direction D3 than the through hole 123h.

A through hole 19h extending along the first direction D1 is provided substantially at the center of the support member 19 in the third direction D3 and the second direction D2. As illustrated in FIG. 3, the second cylindrical section 182 is fixed to the support member 19 by screwing or the like in a state where an upper surface of the second cylindrical section 182 of the bearing holder 18 abuts an area of a lower surface of the support member 19, which is around the through hole 19h. Thus, the bearing holder 18 can be supported by the support member 19 so as to be suspended from the upper wall 123a of the arm base 123. Thus, the height of the arm base 123 can be reduced as compared with, for example, a case where the support member 19 is provided on the lower wall 123b of the arm base 123.

The shaft member 154 is inserted through the through hole 19h of the support member 19, and the upper end of the shaft member 154 protrudes above the support member 19. Therefore, the support member 19 can be disposed as low as possible with respect to the shaft member 154. Accordingly, it is possible to prevent or reduce an increase in the height of an assembly of the intermediate member 150a, the first bearing 17a, the second bearing 17b, the bearing holder 18, and the support member 19.

The support member 19 is made of a material having a strength enough to support the bearing holder 18. Examples of such a material include, but are not particularly limited to, various metal materials and various resin materials.

The shape of the support member 19 is not limited to the shape described above and illustrated in the drawings. For example, the support member 19 may have a disk shape. Further, the support member 19 may be fixed to the side wall 123c of the arm base 123, or may be fixed to the lower wall 123b of the arm base 123.

The second pulley 152 is continuous with the first columnar section 154a of the shaft member 154 at a position slightly below the upper end of the first columnar section 154a. The recessed section 152a having an annular shape recessed downward is provided on an upper surface of the second pulley 152 and around the shaft member 154. That is, the second pulley 152 has the recessed section 152a having an annular shape and formed coaxially with the second pulley 152 inside the second pulley 152. As described above, at least a part of the first cylindrical section 181 of the bearing holder 18 is inserted into the recessed section 152a. At least a part of the first cylindrical section 181 overlaps the first endless belt 153 wound around the second pulley 152 when viewed in the projection along a direction orthogonal to the first direction D1, for example, in the second direction D2 or the third direction D3. Accordingly, as compared with a case where the bearing holder 18 is disposed above the second pulley 152, it is possible to prevent or reduce an increase in the height of the assembly of the intermediate member 150a and the bearing holder 18. Therefore, it is possible to prevent or reduce an increase in the height of the arm base 123 of the second arm 12b. Thus, it is possible to prevent or reduce a decrease in the maximum stroke length by which the shaft 13c can move up and down.

The third pulley 155 is continuous with a lower end of the second pulley 152 and the first columnar section 154a of the shaft member 154.

In the present embodiment, the bearing holder 18, the second pulley 152, and the third pulley 155 are arranged in this order from the upper side to the lower side in the first direction D1. However, the order of these is not limited to this order.

For example, the second pulley 152 may be disposed below the third pulley 155. Further, the bearing holder 18 may be disposed above the second pulley 152 and the third pulley 155, or may be disposed below the second pulley 152 and the third pulley 155. In a case where the bearing holder 18 is located below the second pulley 152 and the third pulley 155, a recessed section may be provided in the lower one of the second pulley 152 and the third pulley 155, and at least a part of the bearing holder 18 may be housed in the recessed section. In addition, in a case where the bearing holder 18 is located above the second pulley 152 and the third pulley 155, a recessed section may be provided in the higher one of the second pulley 152 and the third pulley 155, and at least a part of the bearing holder 18 may be housed in the recessed section. In addition, at this time, the bearing holder 18 may overlap with one of the first endless belt 153 and the second endless belt 157 that is closer to the recessed section 152a, when viewed in the projection along a direction orthogonal to the first direction D1. Even in such a configuration, it is possible to prevent or reduce an increase in the height of an assembly of the intermediate member 150a, the first bearing 17a, and the bearing holder 18.

However, the recessed section 152a need not be provided in either of the second pulley 152 or the third pulley 155. Further, a bearing and the bearing holder 18 may be provided at each of the both end sections of the shaft member 154. In this case, the recessed section 152a may be provided in each of the second pulley 152 and the third pulley 155, and at least a part of the bearing holder 18 may be housed in the corresponding recessed section 152a. In addition, the recessed section 152a of the second pulley 152 may be provided in an upwardly recessed annular shape on a lower surface of the second pulley 152 and around the shaft member 154. In this case, the shaft member 154 and the second pulley 152 can be configured as separate bodies, and a screw hole or the like for fixing the second pulley 152 to the shaft member 154 can be provided in the recessed section 152a. Further, in this case, the shaft member 154 and the third pulley 155 can be configured as separate bodies, and a screw hole or the like for fixing the third pulley 155 to the shaft member 154 can be provided in an upper section of the third pulley 155. With such a configuration, the shaft member 154 can be shared, and the outer diameter of the second pulley 152 and the outer diameter of the third pulley 155 can be easily changed by changing the second pulley 152 and the third pulley 155 fixed to the shaft member 154. Further, the second motor 142a may be disposed further on a - side in the second direction D2 than the first motor 141a. In this case, the second transmission section 160 may be disposed so as not to interfere with the first motor 141a and the first transmission section 150, and the intermediate member 150a may be disposed below the second motor 142a in the first direction D1.

As described above, the robot 10 according to the present embodiment includes the base 11, the first arm 12a, the second arm 12b, the shaft 13c, the first motor 141a, the second motor 142a, the first transmission section 150, and the second transmission section 160. The first arm 12a is provided on the base 11 and configured to rotate about the first axis A1 with respect to the base 11. The second arm 12b is provided on the first arm 12a and configured to rotate about the second axis A2 parallel to the first axis A1 with respect to the first arm 12a. The shaft 13c is provided at the distal end section of the second arm 12b, and configured to rotate about the third axis A3 parallel to the second axis A2 and to move up and down along the third axis A3. The first motor 141a is provided on the second arm 12b and generates power for rotating the shaft 13c. The second motor 142a is provided on the second arm 12b and generates power for moving the shaft 13c up and down. The first transmission section 150 is provided in the second arm 12b, and decelerates the rotation of the first motor 141a to transmit the decelerated rotation to the shaft 13c. The second transmission section 160 is provided in the second arm 12b and transmits the rotation of the second motor 142a to the shaft 13c. A direction parallel to the third axis A3 is defined as the first direction D1.

The first transmission section 150 includes the first pulley 151, the second pulley 152, the first endless belt 153, the third pulley 155, the fourth pulley 156, and the second endless belt 157. The first pulley 151 is located below the first motor 141a in the first direction D1, and is fixed to the output shaft of the first motor 141a. The second pulley 152 is located between the first pulley 151 and the shaft 13c. The first endless belt 153 is wound around the first pulley 151 and the second pulley 152. The third pulley 155 is coaxially fixed to the second pulley 152. The fourth pulley 156 is provided coaxially with the shaft 13c. The second endless belt 157 is wound around the third pulley 155 and the fourth pulley 156.

The second pulley 152 and the third pulley 155 are located below the second motor 142a in the first direction D1.

As described above, the first transmission section 150 is constituted by a belt transmission device including the four pulleys 151, 152, 155, and 156 and the two endless belts 153 and 157. Therefore, it is possible to decelerate the rotation of the first motor 141a and apply sufficient torque to the shaft 13c. In addition, since the first transmission section 150 is configured by the belt transmission device, it is possible to reduce the weight of the first transmission section 150 compared to a case where the first transmission section 150 is configured by a gear device or the like. This makes it possible to reduce the moment of inertia when the second arm 12b rotates.

Further, the second pulley 152 and the third pulley 155 are located below the second motor 142a in the first direction D1. Thus, the second pulley 152 and the third pulley 155 can be brought closer to the second axis A2, compared to, for example, a case where the second pulley 152 and the third pulley 155 are located between the second motor 142a and the shaft 13c when viewed from the first direction D1. This makes it possible to reduce the moment of inertia when the second arm 12b rotates. Accordingly, it is possible to prevent or reduce an increase in the width of the second arm 12b, compared to, for example, a case where the second pulley 152 and the third pulley 155 are separated from the second motor 142a in the third direction D3 when viewed from the first direction D1. That is, it is possible to reduce the moment of inertia when the second arm 12b rotates while preventing or reducing an increase in the width of the second arm 12b.

The robot 10 according to the present embodiment further includes the shaft member 154, the first bearing 17a, and the bearing holder 18. The shaft member 154 is located below the second motor 142a in the first direction D1, extends in the first direction D1, and is provided with the second pulley 152 and the third pulley 155. The first bearing 17a rotatably supports the shaft member 154. The bearing holder 18 holds the first bearing 17a. One of the second pulley 152 and the third pulley 155 is provided with the recessed section 152a. At least a part of the bearing holder 18 is housed in the recessed section 152a. When viewed from a direction orthogonal to the first direction D1, the bearing holder 18 overlaps with one of the first endless belt 153 and the second endless belt 157, which is closer to the recessed section 152a. In the present embodiment, one of the first endless belt 153 and the second endless belt 157, which is closer to the recessed section 152a, is the first endless belt 153.

Therefore, it is possible to prevent or reduce an increase in the height of an assembly of the shaft member 154, the first bearing 17a, and the bearing holder 18. Accordingly, it is possible to prevent or reduce an increase in the height of the second arm 12b. As a result, it is possible to prevent or reduce a decrease in the maximum stroke length by which the shaft 13c can move up and down.

In addition, the end section of the shaft member 154 opposite to the end section of the shaft member 154 on which the second pulley 152 and the third pulley 155 are provided protrudes from the bearing holder 18.

Therefore, as compared with the case where the end section of the shaft member 154 is covered with the bearing holder 18, it is possible to prevent or reduce an increase in the height of the assembly of the shaft member 154 and the bearing holder 18.

Further, the bearing holder 18 includes the first cylindrical section 181 and the second cylindrical section 182. The first cylindrical section 181 extends in the first direction D1, and at least a part of the first cylindrical section 181 is housed in the recessed section 152a. The second cylindrical section 182 is connected to the first cylindrical section 181, is exposed from the recessed section 152a, extends in the first direction D1, has the outer diameter larger than the outer diameter of the first cylindrical section 181, and is connected to the second arm 12b.

Therefore, it is possible to provide, in the second cylindrical section 182, a screw hole or the like for indirectly or directly connecting the bearing holder 18 to the second arm 12b while housing at least a part of the first cylindrical section 181 in the recessed section 152a. In addition, it is possible to increase the rigidity of the second cylindrical section 182 that is indirectly or directly connected to the second arm 12b.

Further, the bearing holder 18, the second pulley 152, and the third pulley 155 are arranged in this order from the upper side to the lower side in the first direction D1.

Therefore, the fourth pulley 156 to which power is transmitted from the third pulley 155 via the second endless belt 157 can be disposed in the lower section of the second arm 12b. As a result, compared to a case where the third pulley 155 is located above the second pulley 152, it is possible to increase the maximum stroke length by which the shaft 13c can move up and down.

In addition, the robot 10 according to the present embodiment further includes the second bearing 17b that is housed in the bearing holder 18 and rotatably supports the shaft member 154. When the separation distance between the first bearing 17a and the second bearing 17b is L1 and the total length of the shaft member 154 is L2, L1/L2 × 100 [%] is 5% or more and 10% or less.

In this way, by setting the L1/L2 × 100 to be equal to or greater than the lower limit value, it is possible to sufficiently ensure the separation distance L1 between the first bearing 17a and the second bearing 17b. As a result, it is possible to prevent or reduce wobbling of the shaft member 154 during rotation. In addition, by setting the L1/L2 × 100 to be equal to or less than the upper limit value described above, it is possible to sufficiently ensure the lengths of the portions in which the second pulley 152 and the third pulley 155 are provided in the shaft member 154, and to prevent or reduce an increase in the total length L2 of the shaft member 154. Accordingly, it is possible to prevent or reduce an increase in the height of the second arm 12b. As a result, it is possible to prevent or reduce a decrease in the maximum stroke length by which the shaft 13c can move up and down.

In addition, the second arm 12b further includes the arm base 123 that extends in a direction orthogonal to the second axis A2, is hollow, and houses at least a part of the bearing holder 18, and the support member 19 that is fixed to the upper wall 123a of the arm base 123 and supports the bearing holder 18.

Therefore, the bearing holder 18 can be supported so as to be suspended from the upper wall 123a of the arm base 123. Thus, the height of the arm base 123 can be reduced as compared with, for example, a case where the support member 19 is provided on the lower wall 123b of the arm base 123. As a result, it is possible to prevent or reduce a decrease in the maximum stroke length by which the shaft 13c can move up and down. Further, since the arm base 123 is hollow, the moment of inertia when the second arm 12b rotates can be further reduced.

The first transmission section 150 is housed in the arm base 123. The second transmission section 160 is located above the arm base 123.

Therefore, assembling the first transmission section 150 to the second arm 12b and assembling the second transmission section 160 to the second arm 12b can be performed separately. This simplifies assembling and maintenance of the robot 10.

When the width of the first endless belt 153 in the first direction D1 is W1 and the width of the second endless belt 157 in the first direction D1 is W2, W2/W1 is 1.2 or more and 3 or less.

By setting the W2/W1 to be equal to or greater than the lower limit value described above, it is possible to sufficiently ensure the width W2 of the second endless belt 157. Therefore, it is possible to prevent or reduce a displacement or idling of the second endless belt 157 with respect to the third pulley 155 and the fourth pulley 156. Further, when the third pulley 155 and the fourth pulley 156 are synchronous pulleys, and the second endless belt 157 is a synchronous belt, this prevents or reduces tooth skipping of the second endless belt 157. Further, by setting the W2/W1 to be equal to or less than the upper limit value described above, it is possible to prevent or reduce an increase in the length of the first transmission section 150 in the first direction D1, while sufficiently ensuring the width W1 of the first endless belt 153. Accordingly, it is possible to prevent or reduce an increase in the height of the second arm 12b.

Further, the robot 10 according to the present embodiment is a ceiling-mounted type robot.

In the ceiling-mounted type robot 10, the second arm 12b is required to have as small a width as possible so as to be less likely to interfere with an object disposed in the work space of the robot 10. Therefore, in the ceiling-mounted type robot 10, it is particularly beneficial to dispose the second pulley 152 and the third pulley 155 below the second motor 142a in the first direction D1.

As described above, the robot according to the present disclosure has been described with reference to the illustrated embodiments, but the present disclosure is not limited thereto. In addition, each section of the robot can be replaced with any structure that can exhibit the same function. In addition, any structure may be added to the robot.

## Claims

1. A robot comprising:
a base;
a first arm provided on the base and configured to rotate about a first axis with respect to the base;
a second arm provided on the first arm and configured to rotate about a second axis parallel to the first axis with respect to the first arm;
a shaft provided at a distal end section of the second arm and configured to rotate about a third axis parallel to the second axis and to move up and down along the third axis;
a first motor provided in the second arm and configured to generate power for rotating the shaft;
a second motor provided in the second arm and configured to generate power for moving the shaft up and down;
a first transmission section provided in the second arm and configured to decelerate a rotation of the first motor to transmit the decelerated rotation to the shaft; and
a second transmission section provided in the second arm and configured to transmit a rotation of the second motor to the shaft, wherein
when a direction parallel to the third axis is a first direction,
the first transmission section includes
a first pulley located below the first motor in the first direction and fixed to an output shaft of the first motor,
a second pulley located between the first pulley and the shaft,
a first endless belt wound around the first pulley and the second pulley,
a third pulley coaxially fixed to the second pulley,
a fourth pulley provided coaxially with the shaft, and
a second endless belt wound around the third pulley and the fourth pulley, and
the second pulley and the third pulley are located below the second motor in the first direction.

2. The robot according to claim 1, further comprising:
a shaft member that is located below the second motor in the first direction, extends in the first direction, and is provided with the second pulley and the third pulley;
a first bearing that rotatably supports the shaft member; and
a bearing holder that holds the first bearing, wherein
one of the second pulley and the third pulley is provided with a recessed section,
at least a part of the bearing holder is housed in the recessed section, and
when viewed from a direction orthogonal to the first direction, the bearing holder overlaps with one of the first endless belt and the second endless belt that is closer to the recessed section.

3. The robot according to claim 2, wherein an end section of the shaft member protrudes from the bearing holder, the end section being opposite to an end section of the shaft member on which the second pulley and the third pulley are provided.

4. The robot according to claim 2, wherein the bearing holder includes
a first cylindrical section extending in the first direction, at least a part of the first cylindrical section being housed in the recessed section, and
a second cylindrical section that is connected to the first cylindrical section, is exposed from the recessed section, extends in the first direction, has an outer diameter larger than an outer diameter of the first cylindrical section, and is connected to the second arm.

5. The robot according to claim 2, wherein the bearing holder, the second pulley, and the third pulley are arranged in this order from an upper side to a lower side in the first direction.

6. The robot according to claim 2, further comprising a second bearing that is housed in the bearing holder and rotatably supports the shaft member, wherein
L1/L2 × 100 [%] is 5% or more and 10% or less, where L1 is a separation distance between the first bearing and the second bearing and L2 is a total length of the shaft member.

7. The robot according to claim 2, wherein the second arm further includes
an arm base that extends in a direction orthogonal to the first direction, is hollow, and houses at least a part of the bearing holder, and
a support member that is fixed to an upper wall of the arm base and supports the bearing holder.

8. The robot according to claim 7, wherein the first transmission section is housed in the arm base, and
the second transmission section is located above the arm base.

9. The robot according to claim 1, wherein W2/W1 is 1.2 or more and 3 or less, where W1 is a width of the first endless belt in the first direction and W2 is a width of the second endless belt in the first direction.

10. The robot according to claim 1, wherein the robot is a ceiling-mounted type robot.
